(19) Europäisches Patentamt
European Patent Office
Office européen des brevets

(11) **EP 3 251 458 B1**

(12) **EUROPEAN PATENT SPECIFICATION**

(45) Date of publication and mention
of the grant of the patent:
**06.07.2022 Bulletin 2022/27**

(21) Application number: **15820942.9**

(22) Date of filing: **11.12.2015**

(51) International Patent Classification (IPC):
**H04W 74/08** (2009.01)     **H04W 16/14** (2009.01)

(52) Cooperative Patent Classification (CPC):
**H04W 74/0816; H04W 16/14**

(86) International application number:
**PCT/US2015/065230**

(87) International publication number:
**WO 2016/122786 (04.08.2016 Gazette 2016/31)**

(54) **LAA (LICENSE ASSISTED ACCESS) BURST CONTROL INFORMATION**

LAA-BURSTSTEUERUNGSINFORMATIONEN

INFORMATIONS DE COMMANDE DE SALVE À ACCÈS ASSISTÉ PAR LICENCE (LAA)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2015 US 201562108661 P**

(43) Date of publication of application:
**06.12.2017 Bulletin 2017/49**

(73) Proprietor: **Apple Inc.**
**Cupertino, CA 95014 (US)**

(72) Inventors:
• **XIONG, Gang**
**Beaverton, Oregon 97006 (US)**
• **KWON, Hwan-Joon**
**Santa Clara, California 95054 (US)**
• **HE, Hong**
**Beijing 100190 (CN)**
• **LEE, Jeong Julie**
**Portland, Oregon 97229 (US)**
• **BHORKAR, Abhijeet**
**Fremont, California 94555 (US)**

(74) Representative: **Barton, Russell Glen**
**Withers & Rogers LLP**
**2 London Bridge**
**London SE1 9RA (GB)**

(56) References cited:
**US-A1- 2011 096 711     US-A1- 2014 341 018**

• **BROADCOM CORPORATION ET AL: "Robust Coexistence LAA-LTE", 3GPP DRAFT; R1-145167_ROBUSTCOEXISTENCELAA -FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050876190, Retrieved from the Internet: URL:http://www.3gpp.org/ftp/Meetings_3GPP_ SYNC/RAN1/Docs/ [retrieved on 2014-11-17]**
• **ALCATEL-LUCENT SHANGHAI BELL ET AL: "Hidden node problem and potential solutions for LAA", 3GPP DRAFT; R1-144703 - HIDDEN NODE - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050895086, Retrieved from the Internet: URL:http://www.3gpp.org/ftp/Meetings_3GPP_ SYNC/RAN1/Docs/ [retrieved on 2014-11-17]**

- KYOCERA: "Further considerations on the essential functionalities for LAA", 3GPP DRAFT; R1-144955, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050895108, Retrieved from the Internet: URL:http://www.3gpp.org/ftp/Meetings_3GPP_ SYNC/RAN1/Docs/ [retrieved on 2014-11-17]
- ALCATEL-LUCENT SHANGHAI BELL ET AL: "LBT Enhancements for Licensed-Assisted Access", 3GPP DRAFT; R1-144701-FRAME STRUCTURE - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 8 November 2014 (2014-11-08), XP050885393, Retrieved from the Internet: URL:http://www.3gpp.org/ftp/tsg_ran/WG1_RL 1/TSGR1_79/Docs/ [retrieved on 2014-11-08]

**Description**

REFERENCE TO RELATED APPLICATIONS

This application claims the benefit of U.S. Provisional Application No. 62/108,661 filed January 28, 2015, entitled "ON THE TRANSMISSION OF LAA BURST CONTROL INFORMATION".

FIELD

The present disclosure relates to wireless technology, and more specifically to techniques for communicating control information for a license assisted access (LAA) burst transmission.

BACKGROUND

A conventional LTE (Long Term Evolution) system utilizes the spectrum that is exclusively assigned to the corresponding LTE service provider (or operator), referred to as LTE in Licensed Spectrum or simply LTE. However, due to an upsurge in demand for wireless broadband data, data throughput of an LTE system can be increased by transmitting data through unlicensed spectrum as well as licensed spectrum. Towards this end, a new study item "Study on Licensed Assisted Access using LTE" was approved by 3GPP (the Third Generation Partnership Project) in the RAN (radio access network) #65 meeting. The basic concept of License Assisted Access (LAA) is to extend the LTE technology into unlicensed deployments, thus enabling operators and vendors to leverage existing or planned investments in LTE/EPC (evolved packet core) hardware in the radio and core network, while coexisting with other technologies and meeting regulatory guidance. US 2014/0341018 A1 provides an example of this.

In LAA, Carrier Aggregation (CA) mechanisms defined in LTE-Advanced are employed to leverage unlicensed spectrum to complement the licensed spectrum for offloading best-effort traffic. Under this scenario, an existing licensed LTE primary cell (Pcell) carries critical control signaling, mobility, and user data to be transmitted with higher quality of service, while less-demanding, best-effort traffic is carried on a secondary cell (Scell) on unlicensed spectrum. In this regard, the joint operation and flexible offload between licensed and unlicensed carriers can be easily achieved. The invention is defined in the independent claims. Preferred embodiments are defined in the dependent claims.

BRIEF DESCRIPTION OF THE DRAWINGS

FIG. 1 is a block diagram illustrating an example user equipment (UE) useable in connection with various aspects described herein.

FIG. 2 is a diagram illustrating an example frame structure of a LAA (license assisted access) burst that can be employed according to various aspects described herein.

FIG. 3 is a block diagram illustrating a system that facilitates communication of LAA burst control information associated with an LAA burst from a base station according to various aspects described herein.

FIG. 4 is a block diagram illustrating a system that facilitates communication of LAA burst control information associated with a LAA burst to a mobile terminal according to various aspects described herein.

FIG. 5 is a flow diagram illustrating a method that facilitates communication of LAA burst control information associated with an LAA burst from a base station according to various aspects described herein.

FIG. 6 is a flow diagram illustrating a method that facilitates communication of LAA burst control information associated with a LAA burst to a mobile terminal according to various aspects described herein.

FIG. 7 is a pair of diagrams illustrating example implementations for indicating the receiver address(es) for an RTS message according to various aspects described herein.

FIG. 8 is a diagram illustrating an example data format for transmission of a LAA burst control channel message.

DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising."

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

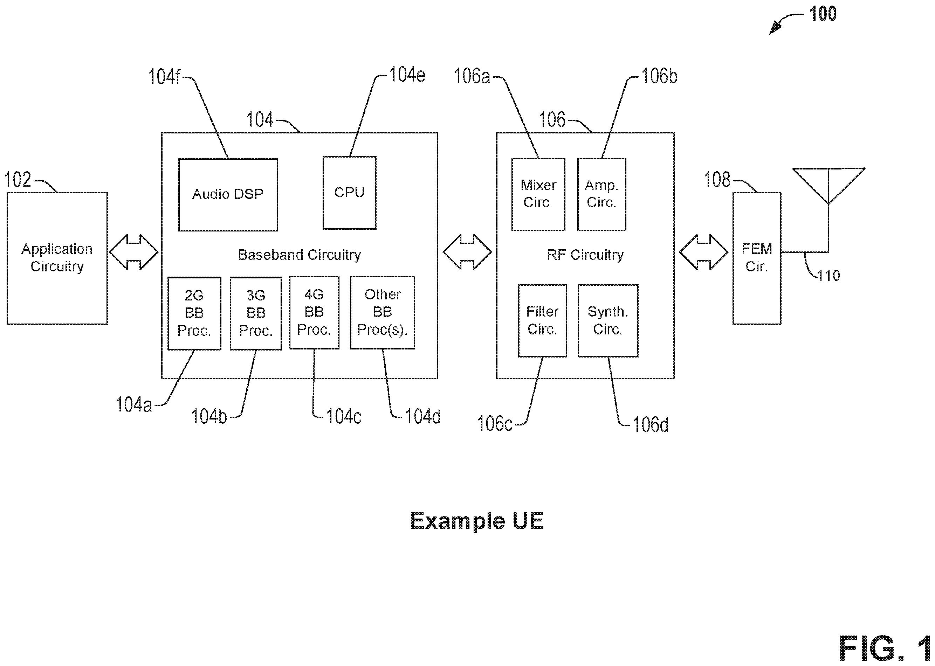

Embodiments described herein may be implemented into a system using any suitably configured hardware and/or software. FIG. 1 illustrates, for one embodiment, example components of a User Equipment (UE) device 100. In some embodiments, the UE device 100 may include application circuitry 102, baseband circuitry 104, Radio Frequency (RF) circuitry 106, front-end module (FEM) circuitry 108 and one or more antennas 110, coupled together at least as shown.

The application circuitry 102 may include one or more application processors. For example, the application circuitry 102 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 104 may include circuitry such as, but not limited to, one or more single-core or multi-core processors. The baseband circuitry 104 may include one or more baseband processors and/or control logic to process baseband signals received from a receive signal path of the RF circuitry 106 and to generate baseband signals for a transmit signal path of the RF circuitry 106. Baseband processing circuity 104 may interface with the application circuitry 102 for generation and processing of the baseband signals and for controlling operations of the RF circuitry 106. For example, in some embodiments, the baseband circuitry 104 may include a second generation (2G) baseband processor 104a, third generation (3G) baseband processor 104b, fourth generation (4G) baseband processor 104c, and/or other baseband processor(s) 104d for other existing generations, generations in development or to be developed in the future (e.g., fifth generation (5G), 6G, etc.). The baseband circuitry 104 (e.g., one or more of baseband processors 104a-d) may handle various radio control functions that enable communication with one or more radio networks via the RF circuitry 106. The radio control functions may include, but are not limited to, signal modulation/demodulation, encoding/decoding, radio frequency shifting, etc. In some embodiments, modulation/demodulation circuitry of the baseband circuitry 104 may include Fast-Fourier Transform (FFT), precoding, and/or constellation mapping/demapping functionality. In some embodiments, encoding/decoding circuitry of the baseband circuitry 104 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 104e of the baseband circuitry 104 may be configured to run elements of the protocol stack for signaling of the PHY, MAC, RLC, PDCP and/or RRC layers. In some embodiments, the baseband circuitry may include one or more audio digital signal processor(s) (DSP) 104f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 104 and the application circuitry 102 may be implemented together such as, for example, on a system on a chip (SOC).

In some embodiments, the baseband circuitry 104 may provide for communication compatible with one or more radio technologies. For example, in some embodiments, the baseband circuitry 104 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 104 is configured to support radio communications of more than one wireless protocol may be referred to as multi-mode baseband circuitry.

RF circuitry 106 may enable communication with wireless networks using modulated electromagnetic radiation through a non-solid medium. In various embodiments, the RF circuitry 106 may include switches, filters, amplifiers, etc. to facilitate the communication with the wireless network. RF circuitry 106 may include a receive signal path which may include circuitry to down-convert RF signals received from the FEM circuitry 108 and provide baseband signals to the baseband circuitry 104. RF circuitry 106 may also include a transmit signal path which may include circuitry to up-convert baseband signals provided by the baseband circuitry 104 and provide RF output signals to the FEM circuitry 108 for transmission.

In some embodiments, the RF circuitry 106 may include a receive signal path and a transmit signal path. The receive signal path of the RF circuitry 106 may include mixer circuitry 106a, amplifier circuitry 106b and filter circuitry 106c. The transmit signal path of the RF circuitry 106 may include filter circuitry 106c and mixer circuitry 106a. RF circuitry 106 may also include synthesizer circuitry 106d for synthesizing a frequency for use by the mixer circuitry 106a of the receive signal path and the transmit signal path. In some embodiments, the mixer circuitry 106a of the receive signal path may be configured to down-convert RF signals received from the FEM circuitry 108 based on the synthesized frequency provided by synthesizer circuitry 106d. The amplifier circuitry 106b may be configured to amplify the down-converted signals and the filter circuitry 106c may be a low-pass filter (LPF) or band-pass filter (BPF) configured to remove unwanted signals from the down-converted signals to generate output baseband signals. Output baseband signals may be provided to the baseband circuitry 104 for further processing. In some embodiments, the output baseband signals may be zero-frequency baseband signals, although this is not a requirement. In some embodiments, mixer circuitry 106a of the receive signal path may comprise passive mixers, although the scope of the embodiments is not limited in this respect.

In some embodiments, the mixer circuitry 106a of the transmit signal path may be configured to up-convert input baseband signals based on the synthesized frequency provided by the synthesizer circuitry 106d to generate RF output signals for the FEM circuitry 108. The baseband signals may be provided by the baseband circuitry 104 and may be filtered by filter circuitry 106c. The filter circuitry 106c may include a low-pass filter (LPF), although the scope of the embodiments is not limited in this respect.

In some embodiments, the mixer circuitry 106a of the receive signal path and the mixer circuitry 106a of the transmit signal path may include two or more mixers and may be arranged for quadrature downconversion and/or upconversion respectively. In some embodiments, the mixer circuitry 106a of the receive signal path and the mixer circuitry 106a of the transmit signal path may include two or more mixers and may be arranged for image rejection (e.g., Hartley image rejection). In some embodiments, the mixer circuitry 106a of the receive signal path and the mixer circuitry 106a may be arranged for direct downconversion and/or direct upconversion, respectively. In some embodiments, the mixer circuitry 106a of the receive signal path and the mixer circuitry 106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 106 may include analog-to-digital converter (ADC) and digital-to-analog converter (DAC) circuitry and the baseband circuitry 104 may include a digital baseband interface to communicate with the RF circuitry 106.

In some dual-mode embodiments, a separate radio IC circuitry may be provided for processing signals for each spectrum, although the scope of the embodiments is not limited in this respect.

In some embodiments, the synthesizer circuitry 106d may be a fractional-N synthesizer or a fractional N/N+1 synthesizer, although the scope of the embodiments is not limited in this respect as other types of frequency synthesizers may be suitable. For example, synthesizer circuitry 106d may be a delta-sigma synthesizer, a frequency multiplier, or a synthesizer comprising a phase-locked loop with a frequency divider.

The synthesizer circuitry 106d may be configured to synthesize an output frequency for use by the mixer circuitry 106a of the RF circuitry 106 based on a frequency input and a divider control input. In some embodiments, the synthesizer circuitry 106d may be a fractional N/N+1 synthesizer.

In some embodiments, frequency input may be provided by a voltage controlled oscillator (VCO), although that is not a requirement. Divider control input may be provided by either the baseband circuitry 104 or the applications processor 102 depending on the desired output frequency. In some embodiments, a divider control input (e.g., N) may be determined from a look-up table based on a channel indicated by the applications processor 102.

Synthesizer circuitry 106d of the RF circuitry 106 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 106 may include an IQ/polar converter.

FEM circuitry 108 may include a receive signal path which may include circuitry configured to operate on RF signals received from one or more antennas 110, amplify the received signals and provide the amplified versions of the received signals to the RF circuitry 106 for further processing. FEM circuitry 108 may also include a transmit signal path which may include circuitry configured to amplify signals for transmission provided by the RF circuitry 106 for transmission by one or more of the one or more antennas 110.

In some embodiments, the FEM circuitry 108 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 106). The transmit signal path of the FEM circuitry 108 may include a power amplifier (PA) to amplify input RF signals (e.g., provided by RF circuitry 106), and one or more filters to generate RF signals for subsequent transmission (e.g., by one or more of the one or more antennas 110.

In some embodiments, the UE device 100 may include additional elements such as, for example, memory/storage, display, camera, sensor, and/or input/output (I/O) interface.

At the RAN1 (RAN WG1 (working group 1)) #79 meeting, the following agreements were made regarding the transmission of channel reservation signals for LAA, as indicated in the Chairman's notes for the RAN1#79 meeting:

- DL [downlink] LAA design [can] assume subframe boundary alignment according to the Rel-12 [Release 12] CA timing relationships across serving cells aggregated by CA

  - At least for LBE [load based equipment], some signal(s) can be transmitted by eNB between the time eNB is permitted to transmit and the start of data transmission at least to reserve the channel

    ∘ This does not imply the data transmission can start only at the subframe boundary
    ✓ Possible restriction on starting position of data transmission can be considered
    ∘ The duration of this signals(s) is part of the maximum transmission duration
    ∘ The content/additional function/duration of this signal is FFS [for further study]

  - This does not imply network synchronization

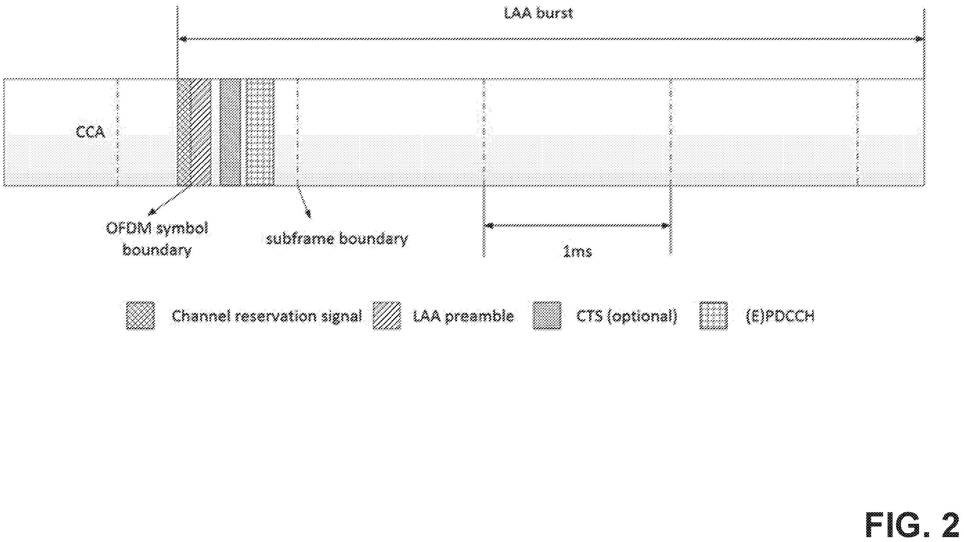

In various aspects, a new LAA burst frame structure and preamble design can be employed to allow efficient LAA operations, and embodiments discussed herein can relate to LAA burst control information associated with such an LAA burst. Referring to **FIG. 2**, illustrated is an example frame structure of a LAA burst that can be employed in connection with various embodiments discussed herein. The LAA burst frame can include one or more of a channel reservation signal (indicated via diagonal cross-hatching), a LAA preamble (indicated via the wider diagonal hatching), an optional Clear to Send (CTS) (indicated via the narrower diagonal hatching), (e)PDCCH (i.e., PDCCH (physical downlink control channel) and/or ePDCCH (enhanced PDCCH), indicated via vertical and horizontal cross-hatching) and data transmission (e.g., including one or more data payloads). In various aspects, a channel reservation signal with variable length can be transmitted at the beginning of the LAA burst after the eNB performs Clear Channel Assessment (CCA) or extended CCA and detects that unlicensed carrier is idle. Subsequently, a LAA preamble can be transmitted after the channel reservation signal, which can facilitate Automatic gain control (AGC), coarse and/or fine synchronization for UEs, and can optionally provide certain information regarding the transmission of the LAA burst. In the latter case, a LAA burst control channel can be embedded within the LAA preamble, which can facilitate efficient LAA operation. In other aspects, however, LAA burst control information can be transmitted in other manners.

In accordance with various embodiments described herein, techniques can be employed to communicate LAA (license assisted access) burst control information associated with a LAA burst such as the example LAA burst illustrated in FIG. 2, which can facilitate efficient LAA operation. In various aspects discussed herein, optional content for the LAA burst control information is provided, along with multiple potential mechanisms for communication (e.g., transmission/reception, etc.) of LAA burst control information. In aspects wherein the LAA burst control information is communicated via a LAA burst control channel, multiple options for the data format and transmission scheme can be employed, including aspects relating to channel coding, rate matching, scrambling, modulation, layer mapping and precoding for the LAA burst control channel.

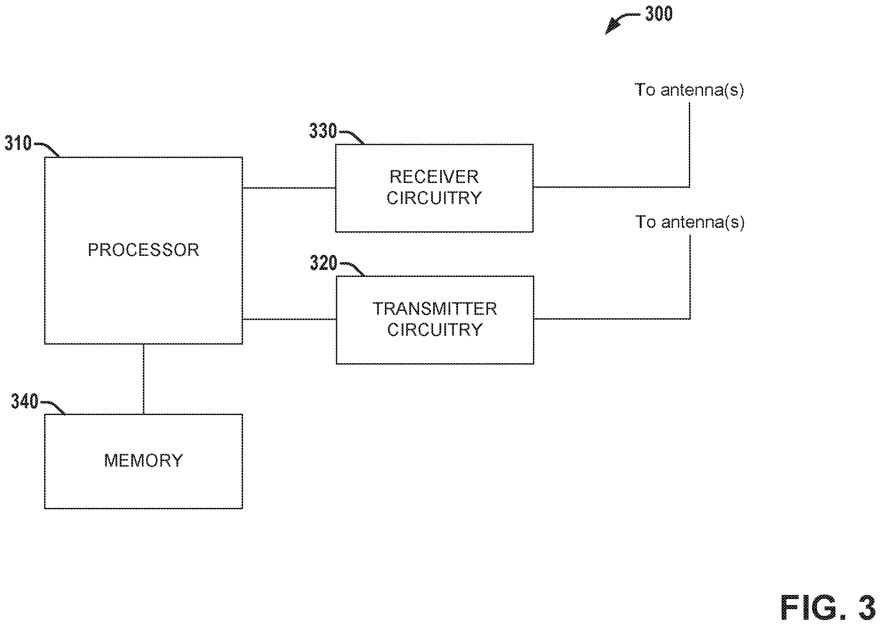

Referring to **FIG. 3,** illustrated is a block diagram of a system 300 that facilitates communication of LAA burst control information associated with an LAA burst from a base station according to various aspects described herein. System 300 can include a processor 310, transmitter circuitry 320, optional receiver circuitry 330, and memory 340 (which can comprise any of a variety of storage mediums and can store instructions and/or data associated with one or more of processor 310, transmitter circuitry 320, or receiver circuitry 330). In various aspects, system 300 can be included within an Evolved Universal Terrestrial Radio Access Network (E-UTRAN) Node B (Evolved Node B, eNodeB, or eNB) or other base station in a wireless communications network. As described in greater detail below, system 300 can facilitate transmission of LAA burst control information that indicates various configuration information of a LAA burst transmission.

Processor 310 can construct an LAA burst transmission, which can include content similar to that of the example LAA burst in FIG. 2. This content can include one or more of a channel reservation signal, a LAA preamble, an optional window to receive (e.g., at receiver circuitry 330) clear to send (CTS) messages from one or more UEs (e.g., in aspects wherein the LAA burst includes one or more request to send (RTS) messages that request a CTS message as feedback, etc.), (e)PDCCH (e.g., PDCCH (physical downlink control channel) and/or ePDCCH (enhanced PDCCH)) messaging, and one or more data payloads.

Additionally, processor 310 can generate LAA burst control information that indicates configuration information associated with the LAA burst. This configuration information can include one or more of a length of the LAA burst, cell ID (identity) information about the cell the LAA burst originates from, operator ID information about the wireless operator the LAA burst originates from, various types of configuration information (e.g., related to discovery reference symbols (DRSs), time division duplex (TDD) control of the channel, etc.), downlink (DL) transmit power information related to the transmit power of reference symbols (RSs) within the LAA burst, an indication of whether the LAA burst includes PBCH (physical broadcast channel) messaging, etc.

Processor 310 includes within the LAA burst control information a request to send (RTS) message with functionality similar to a WiFi RTS message. The RTS message comprises receiver address information that indicates at least one UE designated to respond to the RTS message with a CTS message. A maximum number of UEs, N, that can be indicated can be predetermined (e.g., defined via a specification), or can be configured via higher layer signaling (e.g., SIB (system information block) or RRC (radio resource control), etc.), or can be indicated via the LAA burst control information generated by processor 310. The UEs are indicated via a bitmap that associates UEs with a bit indicating whether a CTS message is requested as feedback, wherein the bit associated with each UE in the bitmap can be configured via higher layer signaling. In some aspects wherein processor 310 includes a RTS message, the RTS message can optionally indicate transmit power control (TPC) information that can specify uplink (UL) transmit power for at least one of a CTS message or one or more other UL transmissions .

Processor 310 can prepare the LAA burst control information for transmission by encoding the LAA burst control information to the physical layer, which can include selecting a data format and transmission scheme for the LAA burst control information, along with associated acts in preparing the LAA burst control information for transmission (e.g., one or more of channel coding, rate matching, scrambling, modulation, layer mapping, precoding, etc.).

Transmitter circuitry 320 can transmit the physical layer encoding of the LAA burst control information, and can transmit the LAA burst, both of which can be transmitted via the unlicensed carrier. In various aspects, depending on the manner in which processor 310 prepared the LAA burst control information for transmission, transmitter circuitry 320 can transmit the LAA burst control information via one or more portions of the LAA burst.

In a first set of embodiments, the LAA burst control information can be prepared as a downlink control information (DCI) message that transmitter circuitry 320 can transmit via the (e)PDCCH of the LAA burst. Depending on the quantity of LAA burst control information, a conventional LTE DCI format can be modified to incorporate the LAA burst control information (e.g., for a small amount of LAA burst control information, such as only the length of the LAA burst, etc.), or an LAA-specific DCI format can be employed that can comprise the LAA burst control information.

In a second set of embodiments, the LAA burst control information can be embedded within a sequence within the LAA preamble of the LAA burst. Due to the limited amount of information that can be carried in this sequence, this second set of embodiments this second set of embodiments is better when less LAA burst control information is to be transmitted. This sequence also can facilitate coarse and/or fine synchronization of UEs.

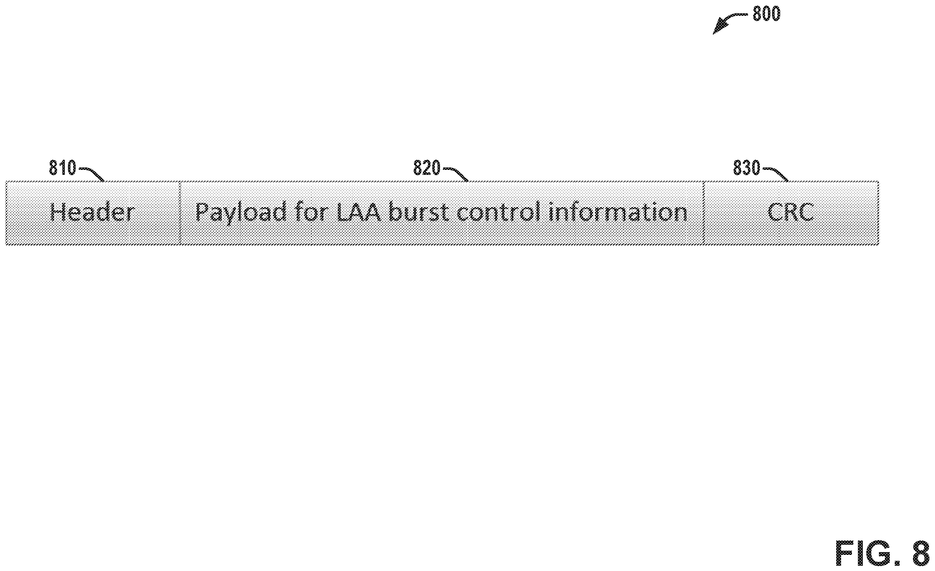

In a third set of embodiments, transmitter circuitry 320 can transmit the LAA burst control information via a dedicated LAA burst control channel, which can be embedded in the LAA preamble. The LAA burst control information can be transmitted within an LAA burst control channel message that can include one or more of a header, a LAA burst control payload, or a cyclic redundancy check. FIG. 8, discussed in greater detail below, illustrates a diagram of a format for an example LAA burst control channel message. When included, the header can identify one or more UEs, such as UEs that are receiving data via the LAA burst, UEs that are requested to feedback a CTS message in response to a RTS message, etc. The LAA burst control payload can contain some or all of the LAA burst control information (e.g., some can be within the header and some within the LAA burst control payload, all within the LAA burst control payload, etc.). The CRC can comprise a variety of parity check bits (e.g., 8, 16, 24, etc.), which can depend on the specific embodiment (e.g., amount of LAA burst control information and size of header and/or LAA burst control payload, etc.).

The LAA burst control channel can be channel coded via either tail biting convolution code (TBCC) or turbo code (TC), which can depend on the embodiment (e.g., TBCC outperforms TC for smaller payload sizes), and can be rate matched to fill out available resource elements (REs) in the system bandwidth. If the LAA preamble includes primary and/or secondary synchronization signals (PSS and/or SSS), the LAA burst control channel can be rate matched around the PSS and/or SSS. The channel coded and rate matched LAA burst control channel can be scrambled based on a scrambling procedure similar to that employed for the physical broadcast channel (PBCH), that can be initialized with a scrambling seed based on one or more of the cell ID, frame index, subframe index, or OFDM (orthogonal frequency division multiplexing) symbol index. Modulation can be based on a modulation scheme with a low modulation order (e.g., 4 or less, etc.), such as BPSK (binary phase shift keying) or QPSK (quadrature phase shift keying), which can ensure reception of the LAA burst control channel.

Receiver circuitry 330, when included, can monitor the unlicensed carrier in connection with a clear channel assessment (CCA) or extended CCA. Based on the monitoring by receiver circuitry 330, processor 310 can determine if the unlicensed carrier is idle based on any of a variety of metrics. Additionally, in aspects wherein the LAA burst control information includes a RTS message, receiver circuitry 330 can receive CTS messages from one or more UEs as feedback in response to the RTS message.

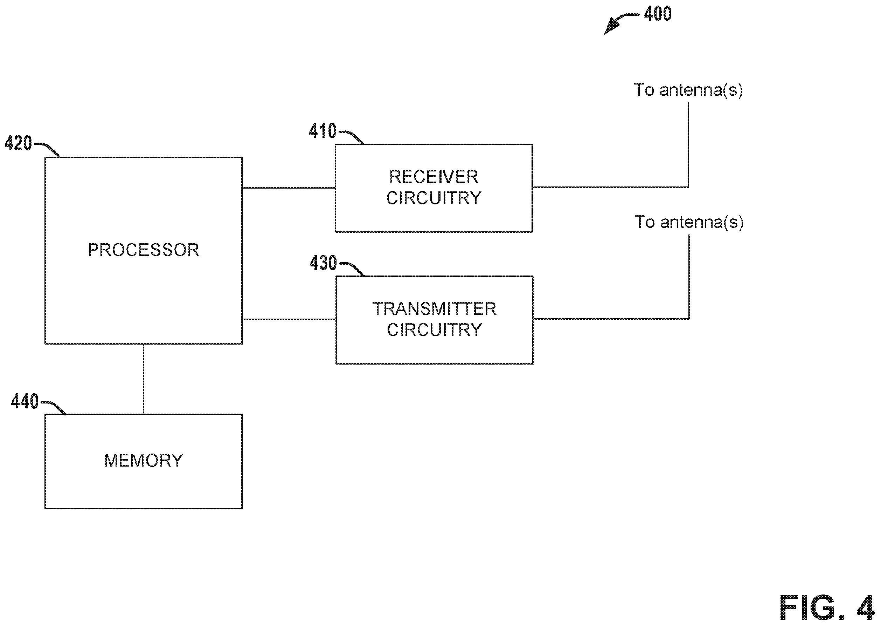

Referring to **FIG. 4,** illustrated is a block diagram of a system 400 that facilitates communication of LAA burst control information associated with a LAA burst to a mobile terminal according to various aspects described herein. System 400 can include receiver circuitry 410, a processor 420, optional transmitter circuitry 430, and a memory 440 (which can comprise any of a variety of storage mediums and can store instructions and/or data associated with one or more of receiver circuitry 410, processor 420, or transmitter circuitry 430). In various aspects, system 400 can be included within a user equipment (UE). As described in greater detail below, system 400 can facilitate reception of LAA burst control information that indicates configuration information of a LAA burst.

Receiver circuitry 410 can receive (via an unlicensed carrier) LAA burst control information from an eNB, which can indicate configuration information (e.g., length, etc.) of a LAA burst transmission from the eNB, and can receive the LAA burst transmission. Depending on the specific embodiment, the LAA burst control information can be received via a DCI message transmitted via (e)PDCCH in the LAA burst, can be received embedded in a sequence within a LAA preamble of the LAA burst transmission, or can be received via a dedicated LAA burst control channel, which can be included within the LAA preamble.

Processor 420 can recover the received LAA burst control information, in a manner appropriate to how the LAA burst control information was received. For example, by decoding the LAA burst control channel, searching for and decoding the DCI message comprising LAA burst control information, or detecting the sequence comprising the LAA burst control information embedded within the LAA preamble.

Processor 420 can determine the indicated configuration information about the LAA burst transmission from the recovered LAA burst control information, which can include a length of the LAA burst transmission and/or other configuration information. In aspects in which the LAA burst control information includes a RTS message, processor 420 can determine whether a CTS message is requested as feedback from the UE employing system 400. Processor 420 can do this by determining whether an ID of the UE (e.g., C-RNTI, IMSI, etc.) is indicated in receiver address information associated with the RTS message, or determining whether a bit associated with the UE in a bitmap indicates that a CTS message is requested as feedback. Where the UE is associated with a bit in a bitmap, receiver 410 can receive a control message (e.g., via RRC, etc.) configuring which bit is associated with the UE.

Transmitter 430, when included, can transmit a CTS message in response to the RTS message (e.g., which can be based on a determination that the channel is clear via a CCA or extended CCA procedure, etc.). Additionally, transmitter 430 can transmit uplink (UL) data during any UL grants to the UE employing system 400. In various aspects, the CTS and/or UL data can be transmitted with a power based on transmit power control (TPC) information received as part of the LAA burst control information.

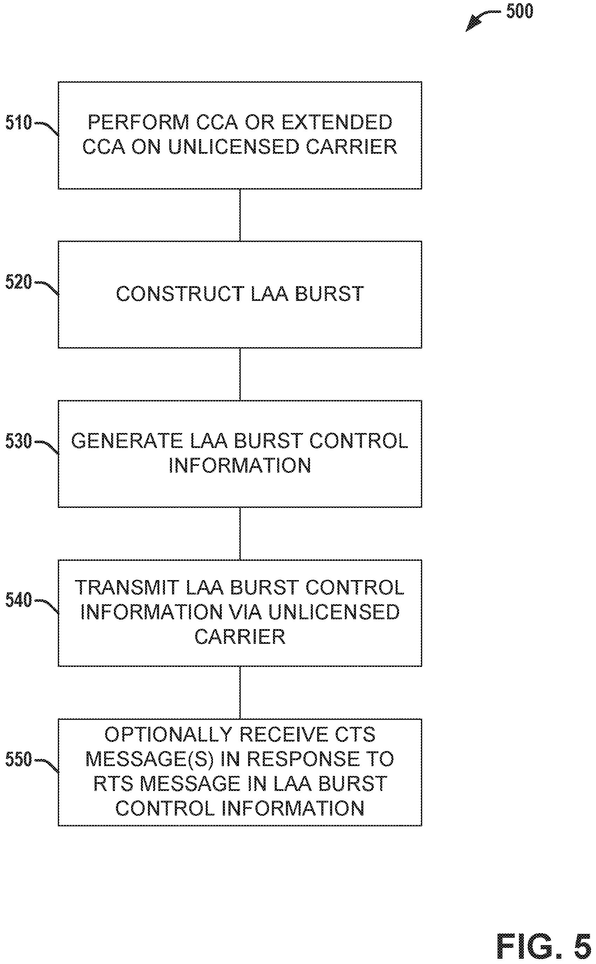

Referring to **FIG. 5**, illustrated is a flow diagram of a method 500 that facilitates communication of LAA burst control information associated with an LAA burst from a base station according to various aspects described herein. In some aspects, method 500 can be performed at an eNB. In other aspects, a machine readable medium can store instructions associated with method 500 that, when executed, can cause an eNB to perform the acts of method 500.

At 510, a CCA or extended CCA can be performed on an unlicensed carrier to determine whether the carrier is idle.

At 520, a LAA burst can be constructed, which can comprise one or more of a channel reservation signal, a LAA preamble, a window for CTS feedback, one or more (e)PDCCH messages, and one or more data payloads.

At 530, LAA burst control information can be generated that indicates configuration information (e.g., length, etc.) associated with the LAA burst. The LAA burst control information includes a RTS message that requests a CTS message as feedback from one or more UEs.

At 540, the LAA burst control information can be transmitted. In various aspects, the LAA burst control information can be transmitted via a DCI message in the (e)PDCCH, embedded in a sequence in the LAA preamble, or via a dedicated LAA burst control channel in the LAA preamble.

At 550, in aspects in which the LAA burst control information includes a RTS message that requests a CTS message as feedback from one or more UEs, a CTS message can be received from none, some, or all of the one or more UEs.

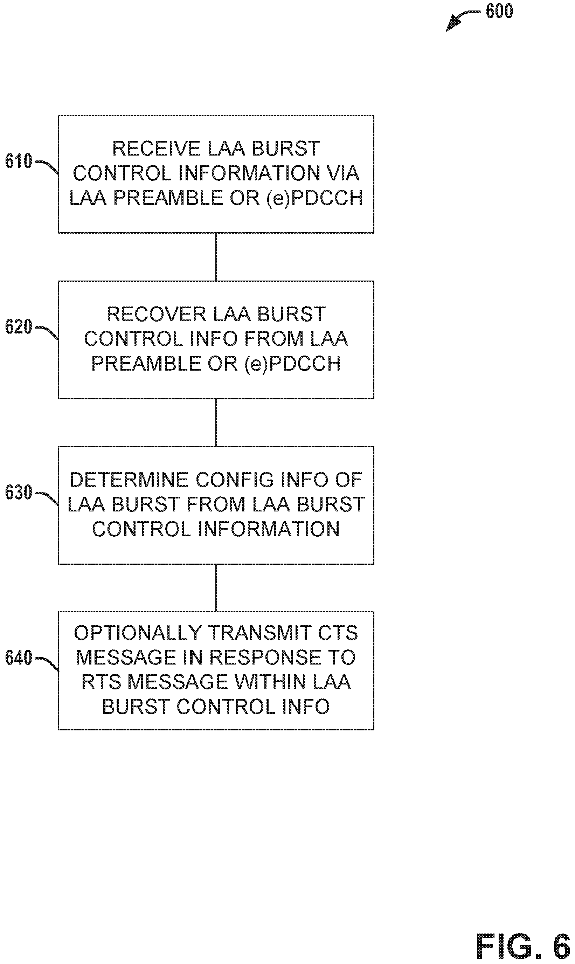

Referring to **FIG. 6,** illustrated is a flow diagram of a method 600 that facilitates communication of LAA burst control information associated with a LAA burst to a mobile terminal according to various aspects described herein. In some aspects, method 600 can be performed at a UE. In other aspects, a machine readable medium can store instructions associated with method 600 that, when executed, can cause a UE to perform the acts of method 600.

At 610, LAA burst control information can be received from an eNB. In various aspects, the LAA burst control information can be received via a DCI message sent via (e)PDCCH, as a sequence embedded within a LAA preamble of a LAA burst transmission, or via a dedicated LAA burst control channel, which can be embedded within the LAA preamble.

At 620, the LAA burst control information can be recovered from either the LAA preamble or (e)PDCCH, depending on how the LAA burst control information was received.

At 630, configuration information of the LAA burst can be determined from the LAA burst control information, which can include a length of the LAA burst, etc. In aspects, the LAA burst control information can include a RTS message that requests a CTS message as feedback from one or more UEs.

At 640, in aspects in which the LAA burst control information includes a RTS message that requests a CTS message as feedback from the UE implementing method 600 (e.g., by indicating an ID of the UE, or, as covered by the claims, via a bit associated with the UE in a bitmap, etc.), a CTS message can be transmitted as feedback in response to a determination that the channel is clear (e.g., via a CCA or extended CCA).

Additional options, details, and specific embodiments are discussed below.

LAA BURST CONTROL INFORMATION

In various aspects, some or all of the following parameters can be included in LAA burst control information: LAA burst length information, cell ID (identity) information, operator identity, Discovery reference symbol (DRS) configuration information, TDD (time division duplex) configuration information, DL (downlink) Transmit power information, Indication of PBCH (physical broadcast channel) transmission. These parameters are discussed in greater detail below.

The LAA burst length information field, when included, can be represented in a form of the number of subframes or of the number of OFDM (orthogonal frequency division multiplexing) symbols. In aspects, the size of this LAA burst length information can be Y bits. In one example, as the maximum transmission duration for a LAA burst can be 13ms, Y can be specified as 4 when the number of subframes is used, and as 16 when the number of symbols is used.

The Cell ID information, when included, can contain full or partial information of the physical-layer cell identity of the cell.

The Operator identity, when included, can contain full or partial information of the operator identity. The operator identity can be either a public land mobile network (PLMN) or Evolved cell global Identifier (E-CGI). In some embodiments, the operator identity can include both PLMN and E-CGI. The operator identity can be received from PCell (primary cell) SIB (system information block).

The DRS configuration information, when included, can contain configuration for the transmission of DRS within the LAA burst. In one example, a bitmap can be used to indicate the transmission of the DRS in the LAA burst. If this field is omitted, the DRS subframe(s) position within the burst can be configured in other ways, for example, by a combination of one or more of a PCell SIB, a SCell (secondary cell) SIB, a PCell PDSCH (physical downlink shared channel), or a SCell PDSCH.

The TDD configuration information, when included, can contain information related to TDD configuration within the LAA burst. In aspects, this can allow dynamic control of downlink and uplink traffic on the unlicensed carriers within a LAA burst. This can also include uplink control configuration, such as CCA duration and backoff parameters.

The DL transmit power information, when included, can contain DL transmit power information, which can include, for example, transmit power of the CRS (common reference symbols) within the burst and/or transmit power of the DRS within the burst. This information can be useful when the transmit power of each LAA burst is dynamically adjusted on a per burst basis. In such aspects, the transmit power information can be used to compute DL path loss and/or for RRM (radio resource management).

The indication of PBCH transmission, when included, can contain an indication whether PBCH is transmitted within the LAA burst. In one example, this field can be a single bit, and when this field is set to 1 (or alternatively to 0), PBCH can be transmitted in the subframe 0 within the LAA burst similarly to PBCH transmission in licensed spectrum LTE operation.

LAA burst control information includes a request to send (RTS) message that can include the functionality of a RTS message as employed in WiFi. In such aspects, the RTS message can optionally include one or more of receiver address information or transmit power control (TPC) information.

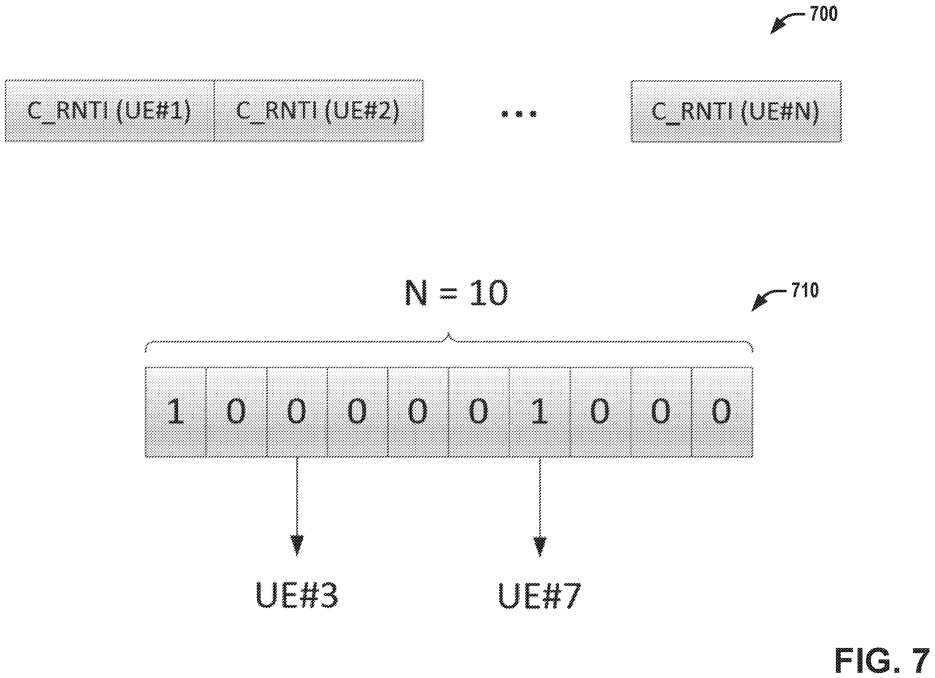

Receiver address information, when included, can contain information for the receiver address(es), which can indicate the UE(s) requested to transmit a CTS (clear to send) message in response to the RTS message. The receiver address can be specified in the form of unicast, multicast or broadcast address. Referring to FIG. 7, illustrated are two diagrams of example implementations for indicating the receiver address(es) for an RTS message according to various aspects described herein.

According to the claimed invention, a bitmap is used to indicate which UEs are requested to feedback a CTS. For example, a "1" can indicate that a UE needs to feedback the CTS to the eNB, while a "0" can indicate that UE does not need to feedback the CTS (or vice versa). Similarly to DCI (downlink control information) format 3/3A, the UE index in the bitmap can be provided via dedicated RRC (radio resource control) signaling.

In various aspects, the bitmap size can be predetermined or dynamic. In the former case, the bitmap size or the number of the UEs can be predefined in the specification, or can be provided by higher layer via SIB or dedicated RRC signaling. In the latter case, the information regarding the number of UEs can be included in the header in aspects wherein a dedicated LAA burst control channel is used for the transmission of the LAA burst control information, as discussed in greater detail below. Alternatively, the number of UEs can be explicitly indicated in one field of the LAA burst control information. In some aspect, the number of UEs included in this field can be limited to up to N users, so that the information can be transmitted in an allocated set of resources (e.g., 2 symbols, etc.).

In one example, as seen at 710 in FIG. 7, N bits can be used for the receiver address bitmap (with N = 10 in the example at 710), and UE #3 and UE #7 can be associated with bit #2 and bit #6, respectively. As shown in the example bitmap of 710, UE #7 is indicated to feedback the CTS while UE #3 is not.

Transmit power control (TPC) information, when included in the RTS message, can contain TPC configuration for the transmission of CTS or uplink data from one or more UEs on the unlicensed carriers. In one example, the nominal transmission power for CTS transmission and a fractional value $\alpha$ can be included in this field. In another example, this field can also be used for the TPC for uplink data transmission.

## TRANSMISSION OF LAA BURST CONTROL INFORMATION

LAA burst control information can be transmitted in any of a variety of ways.

In a first set of embodiments, LAA burst control information can be transmitted via a dedicated LAA burst control channel. For example, an LAA burst control channel can be embedded in the LAA preamble to provide LAA burst control information regarding the transmission of the LAA burst. After successfully decoding the LAA burst control channel, a UE capable of LAA can determine the starting and end position of the LAA burst, and can monitor the (e)PDCCH to check whether the eNB will transmit data in the downlink on the unlicensed carriers. Optional details regarding the design of the LAA burst control channel, for example, data format and transmission scheme, are described in greater detail below.

In a second set of embodiments, the LAA burst control information can be transmitted via (e)PDCCH. In some such aspects, in the case when the size of the LAA burst control information is small, one or more fields can be added to existing DCI formats. For example, LAA burst length can be included in DCI format 1A.

In embodiments wherein the size of the LAA burst control information is relatively large, a new DCI format which contains the LAA burst control information can be defined. Additionally, a new RNTI "LAA-RNTI" can be defined, or the existing RNTI (e.g., SI-RNTI (system information RNTI)) can be reused for the CRC (cyclic redundancy check) mask. To further reduce blind detection attempts by the one or more UEs on unlicensed carriers, a fixed common search space and aggregation level (e.g., with 8 CCEs, etc.) can be specified.

In a third set of embodiments, the LAA burst control information can be embedded in a sequence within the LAA preamble. As the information carried by the sequence would be limited, this option can be beneficial in the case when the size of the LAA burst control information is small. For example, in some embodiments, the LAA burst control information can only contain the information regarding the LAA burst length. After correctly detecting the sequence, a UE can know the LAA burst duration. Additionally, this sequence can also serve the purpose of coarse/fine synchronization for LAA capable UEs.

## LAA BURST CONTROL CHANNEL DESIGN

Several mechanisms can be employed for the transmission of LAA burst control information. In embodiments wherein a dedicated LAA burst control channel is employed, several options exist for the data format and transmission scheme (e.g., including modulation, channel coding and scrambling, etc.).

Referring to **FIG. 8,** illustrated is an example data format for transmission of a LAA burst control channel message 800, which can comprise an optional header 810, a LAA burst control channel payload 820 that can include at least a portion of the LAA burst control information, and a CRC 830. The header 810 can be included or omitted depending on the content of the payload 820. In the case when the header 810 is present, it can contain the information for the number of UEs to which the eNB intends to transmit data or can contain requests to feedback clear to send (CTS) messages. The header 810 can also contain information for the MAC (medium access control) layer, for example, the logical channel ID (LCID).

The payload 820 can additionally contain one or more reserved bits for the LAA burst control channel. For CRC, different numbers (e.g., 8, 16 or 24, etc.) of parity check bits can be calculated based on the payload 820 and/or header 810 and appended to the payload 820. In aspects, one of the generator polynomials $g_{CRC8}(D)$, $g_{CRC16}(D)$, $g_{CRC24A}(D)$ and $g_{CRC24B}(D)$ discussed in section 5.1.1 of the 3GPP TS (technical specification) 36.212 can be employed for LAA burst control channel.

For the LAA burst control channel, either tail biting convolutional codes (TBCC) or turbo code (TC) in the LTE specification can be adopted for channel coding. Because TBCC outperforms TC when the payload size is relatively small, it can be more beneficial to reuse the existing TBCC for the LAA burst control channel. After the channel coding, rate matching can be performed to fill out the available REs (resource elements) within the system bandwidth. Thus, with a larger system bandwidth, a larger number of repetitions can be achieved for the transmission of the LAA burst control channel. In addition, in the case when the PSS (primary synchronization signal) and/or the SSS (secondary synchronization signal) are multiplexed within the LAA preamble, the LAA burst control channel can be rate-matched around the PSS and/or SSS signal.

After the channel coding and rate-matching, scrambling can be performed in order to randomize the interference. In the LAA burst control channel design, a scrambling procedure can be applied that is similar to that in the existing LTE specification for PBCH (physical broadcast channel). The scrambling sequence can be initialized in any of a number of ways, which can depend at least in part on one or more of the cell ID, the frame index, the subframe index, or the OFDM symbol index.

In a first set of embodiments, the scrambling sequence can be initialized with a seed $c_{init}$ that is some function of the cell ID, such as $c_{init} = N_{ID}^{cell}$, where $N_{ID}^{cell}$ is the cell ID.

In a second set of embodiments, the scrambling seed can be defined as a function of one or more of the cell ID, frame index, subframe index, or OFDM symbol number, such as in the following examples: (1) $c_{init} = f(N_{ID}^{cell}, n_{Frame})$, (2) $c_{init} = f(N_{ID}^{cell}, n_{SF})$, or (3) $c_{init} = f(N_{ID}^{cell}, n_{SF}, n_{symbol})$, where $n_{Frame}$ is the frame number, $n_{SF}$ is the subframe index and $n_{symbol}$ is the OFDM symbol index within one subframe. In one specific example, the scrambling seed can be given as $c_{init} = (n_{SF} + 1) \cdot (2N_{ID}^{cell} + 1) \cdot 2^9 + N_{ID}^{cell}$.

For modulation, in various aspects, a low modulation order can be employed, such as either BPSK (binary phase shift keying) or QPSK (quadrature phase shift keying), which can facilitate robust reception of the LAA burst control channel.

In situations involving multi-antenna transmission, either transmit diversity or beamforming can be used for transmission of the LAA burst control channel, which depends on the specific reference symbol (RS) structure within the LAA preamble.

The number of APs (antenna ports) used in the transmission of the LAA burst control channel can be provided by higher layer signaling from Pcell via SIB or UE-specific dedicated RRC signaling. This can avoid blind detection of the number of APs on the unlicensed carriers, thereby reducing UE power consumption.

In embodiments wherein the RS structure is such that transmit diversity can be employed, a resource element group (REG) can be defined for a group of 4 consecutive REs in the frequency domain on each antenna port (AP). In addition, precoding for transmit diversity transmission of the LAA burst can be similar to the procedure specified in section 6.3.4.1 or 6.3.4.3 in 3GPP TS 36.211. In aspects, in the case of two APs, Space-Frequency Block Coding (SFBC) can be employed, while in the case of 4 APs, a combination of SFBC and Frequency-Switched Transmit Diversity (FSTD) can be employed.

In embodiments wherein the RS structure is such that beamforming can be employed, beamforming can be employed for the transmission of the LAA burst control channel. The beamforming weights can be selected by the eNB to improve the performance.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

**Claims**

1. An apparatus (300) configured to be employed within a base station, the apparatus comprising

    a processor (310) configured to:

       generate a license assisted access, LAA, burst comprising a channel reservation signal, a LAA preamble, one or more downlink, DL, control channel messages, and one or more data payloads;
       generate LAA burst control information associated with the LAA burst,

    wherein the LAA burst control information comprises a length of the LAA burst and a request to send, RTS, message comprising receiver address information that indicates at least one UE designated to respond to the RTS message with a clear to send, CTS, message, said at least one UE indicated via a bitmap that associates UEs with a bit indicating whether a CTS message is requested as feedback; and

       generate a physical layer encoding of the LAA burst control information; and
       transmitter circuitry (320) configured to transmit the physical layer encoding of the LAA burst control information via an unlicensed carrier.

2. The apparatus of claim 1, wherein the transmitter circuitry is configured to transmit the LAA burst control information embedded in a sequence within the LAA preamble of the LAA burst.

3. The apparatus of claim 2, wherein the sequence facilitates synchronization of one or more user equipments, UEs, with the base station.

4. The apparatus of claim 1, wherein the transmitter circuitry is configured to transmit the LAA burst control information via a LAA burst control channel within the LAA preamble of the LAA burst.

5. The apparatus of any of claims 1-4, wherein the apparatus further comprises receiver circuitry (330) configured to receive CTS messages from at least one UE.

6. The apparatus of claim 5, wherein the one or more UEs comprise N UEs, wherein N is one of: a predetermined number, a number configured via higher layer signaling, or a number indicated via the LAA burst control information.

7. The apparatus of any of claims 1-6, wherein the LAA burst control information comprises one or more of: cell identity information, operator identity information, discovery reference symbol, DRS, configuration information, time division duplex, TDD, configuration information, downlink, DL, and uplink, UL, transmit power information, or an indication of whether a physical broadcast channel, PBCH, is transmitted within the LAA burst.

**8.** An apparatus (400) configured to be employed within a user equipment, UE, the apparatus comprising:

receiver circuitry (410) configured to receive a license assisted access, LAA, preamble and at least one physical downlink control channel, PDCCH, or enhanced PDCCH, ePDCCH, message of a LAA burst transmission via an unlicensed carrier, wherein the LAA preamble or the at least one PDCCH or ePDCCH message comprises LAA burst control information that indicates configuration information associated with of the LAA burst transmission, wherein the LAA burst control information comprises a request to send, RTS, message comprising receiver address information that indicates at least one UE designated to respond to the RTS message with a clear to send, CTS, message, the at least one UE indicated via a bitmap that associates UEs with a bit indicating whether a CTS message is requested as feedback; and
a processor Z (420) operably coupled to the receiver circuitry and configured to

recover the LAA burst control information from the LAA preamble or the at least one PDCCH or ePDCCH message; and
determine a length of the LAA burst transmission based on the recovered LAA burst control information.

**9.** The apparatus of claim 8, wherein the LAA preamble comprises the LAA burst control information via a dedicated LAA burst control channel, and wherein the processor is configured to recover the LAA burst control information by decoding the LAA burst control channel.

**10.** The apparatus of any of claims 8-9, wherein the receiver circuitry is configured to perform a clear channel assessment, CCA, or extended CCA in response to the RTS message, and wherein the apparatus further comprises transmitter circuitry configured to transmit a CTS message in response to the CCA or extended CCA indicating that the unlicensed carrier is clear.

**11.** The apparatus of claim 10, wherein the receiver circuitry is further configured to receive a radio resource control, RRC, signal that indicates the bit associated with the UE.

**12.** The apparatus of claim 10, wherein the LAA burst control information comprises transmit power control, TPC, information, and wherein the transmitter circuitry (430) is configured tc transmit at least one of the CTS message or uplink data based on the TPC information.

**Patentansprüche**

**1.** Vorrichtung (300), die konfiguriert ist, um innerhalb einer Basisstation verwendet zu werden, wobei die Vorrichtung einen Prozessor (310) umfasst, der konfiguriert ist zum:

Erzeugen eines lizenzgestützten Zugriffs-, LAA-, Bursts, der ein Kanalreservierungssignal, eine LAA-Präambel, eine oder mehrere Downlink-, DL-, Steuerkanalnachrichten und eine oder mehrere Datennutzlasten umfasst;
Erzeugen von LAA-Burst-Steuerinformation, die mit dem LAA-Burst verknüpft ist, wobei die LAA-Burst-Steuerinformation eine Länge des LAA-Bursts und eine Sendeanfrage-, RTS-, Nachricht umfasst, die Empfängeradressinformation umfasst, die mindestens eine UE anzeigt, die designiert ist, um auf die RTS-Nachricht mit einer Sendeerlaubnis-, CTS-, Nachricht zu antworten, wobei die mindestens eine UE über eine Bitmap angezeigt wird, die UEs mit einem Bit verknüpft, das anzeigt, ob eine CTS-Nachricht als Rückmeldung angefragt ist; und
Erzeugen einer Bitübertragungsschicht-Codierung der LAA-Burst-Steuerinformation; und
Senderschaltung (320), die konfiguriert ist, um die Bitübertragungsschicht-Codierung der LAA-Burst-Steuerinformation über einen unlizenzierten Träger zu übertragen.

**2.** Vorrichtung nach Anspruch 1, wobei die Senderschaltung konfiguriert ist, um die LAA-Burst-Steuerinformation zu übertragen, die in eine Sequenz innerhalb der LAA-Präambel des LAA-Bursts eingebettet ist.

**3.** Vorrichtung nach Anspruch 2, wobei die Sequenz Synchronisation eines oder mehrerer Benutzergeräte, UEs, mit der Basisstation erleichtert.

**4.** Vorrichtung nach Anspruch 1, wobei die Senderschaltung konfiguriert ist, um die LAA-Burst-Steuerinformation über einen LAA-Burst-Steuerkanal innerhalb der LAA-Präambel des LAA-Bursts zu übertragen.

**5.** Vorrichtung nach einem der Ansprüche 1 bis 4, wobei die Vorrichtung ferner eine Empfängerschaltung (330) umfasst, die konfiguriert ist, um CTS-Nachrichten von mindestens einem UE zu empfangen.

**6.** Vorrichtung nach Anspruch 5, wobei das eine oder die mehreren UEs N UEs umfassen, wobei N eines ist von: einer vorbestimmten Anzahl, einer Anzahl, die über eine Signalisierung einer höheren Schicht konfiguriert ist, oder einer Anzahl, die über die LAA-Burst-Steuerinformation angezeigt wird.

7. Vorrichtung nach einem der Ansprüche 1 bis 6, wobei die LAA-Burst-Steuerinformation eines oder mehrere umfasst von: Zellenidentitätsinformation, Betreiberidentitätsinformation, Entdeckungsreferenzsymbol-, DRS-, Konfigurationsinformation, Zeitduplex-, TDD-, Konfigurationsinformation, Downlink-, DL-, und Uplink-, UL-, Übertragungsleistungsinformation, oder eine Anzeige, ob ein physikalischer Broadcast-Kanal, PBCH, innerhalb des LAA-Bursts übertragen wird.

8. Vorrichtung (400), die konfiguriert ist, um innerhalb eines Benutzergeräts, UE, verwendet zu werden, die Vorrichtung umfassend:

    Empfängerschaltung (410), die konfiguriert ist, um eine lizenzgestützte Zugriffs-, LAA-, Präambel und mindestens eine physikalische Downlink-Steuerkanal-, PDCCH-, oder erweiterte PDCCH-, ePDCCH-, Nachricht einer LAA-Burst-Übertragung über einen unlizenzierten Träger zu empfangen, wobei die LAA-Präambel oder die mindestens eine PDCCH- oder ePDCCH-Nachricht LAA-Burst-Steuerinformation umfasst, die Konfigurationsinformation anzeigt, die mit der LAA-Burst-Übertragung verknüpf ist, wobei die LAA-Burst-Steuerinformation eine Sendeanfrage-, RTS-, Nachricht umfasst, die Empfängeradressinformation umfasst, die mindestens eine UE anzeigt, die designiert ist, um auf die RTS-Nachricht mit einer Sendeerlaubnis-, CTS-, Nachricht zu antworten, wobei die mindestens eine UE über eine Bitmap angezeigt wird, die UEs mit einem Bit verknüpft, das anzeigt, ob eine CTS-Nachricht als Rückmeldung angefragt ist; und
    einen Prozessor (420), der betriebsfähig mit der Empfängerschaltung gekoppelt ist und konfiguriert ist zum: Wiederherstellen der LAA-Burst-Steuerinformation aus der LAA-Präambel oder der mindestens einen PDCCH- oder ePDCCH-Nachricht; und
    Bestimmen einer Länge der LAA-Burst-Übertragung basierend auf der wiederhergestellten LAA-Burst-Steuerinformation.

9. Vorrichtung nach Anspruch 8, wobei die LAA-Präambel die LAA-Burst-Steuerinformation über einen dedizierten LAA-Burst-Steuerkanal umfasst, und wobei der Prozessor konfiguriert ist, um die LAA-Burst-Steuerinformation durch Decodieren des LAA-Burst-Steuerkanals wiederherzustellen.

10. Vorrichtung nach einem der Ansprüche 8 bis 9, wobei die Empfängerschaltung konfiguriert ist, um eine Freikanalbeurteilung, CCA, oder erweiterte CCA als Reaktion auf die RTS-Nachricht durchzuführen, und wobei die Vorrichtung ferner eine Senderschaltung umfasst, die konfiguriert ist, um eine CTS-Nachricht als Reaktion auf die CCA oder erweiterte CCA zu übertragen, die anzeigt, dass der unlizenzierte Träger frei ist.

11. Vorrichtung nach Anspruch 10, wobei die Empfängerschaltung ferner konfiguriert ist, um ein Funkressourcensteuerungs-, RRC-, Signal zu empfangen, das das mit dem UE verknüpfte Bit anzeigt.

12. Vorrichtung nach Anspruch 10, wobei die LAA-Burst-Steuerinformation eine Sendeleistungssteuerungs-, TPC-, Information umfasst, und wobei die Senderschaltung (430) konfiguriert ist, um mindestens eine der CTS-Nachricht oder Uplink-Daten basierend auf der TPC-Information zu übertragen.

**Revendications**

1. Un appareil (300) configuré pour être employé au sein d'une station de base, l'appareil comprenant :

    un processeur (310) configuré pour :

        générer une salve d'accès assisté licencié, LAA, comprenant un signal de réservation de canal, un préambule LAA, un ou plusieurs messages de canal de contrôle de liaison descendante, DL, et une ou plusieurs charges utiles de données ;
        générer une information de contrôle de salve LAA associée à la salve LAA, l'information de contrôle de salve LAA comprenant une longueur de la salve LAA et un message de requête d'envoi, RTS, comprenant une information d'adresse de récepteur qui indique au moins un UE désigné pour répondre au message RTS par un message prêt à envoyer, CTS, ledit au moins un UE étant indiqué par l'intermédiaire d'une bitmap qui associe des UE à un bit indiquant si un message CTS est ou non requis en tant que retour ; et
        générer une couche physique codant l'information de contrôle de salve LAA ; et

    une circuiterie d'émetteur (320) configurée pour émettre la couche physique codant l'information de contrôle de salve LAA via une porteuse non licenciée.

2. L'appareil de la revendication 1, dans lequel la circuiterie d'émetteur est configurée pour émettre l'information de contrôle de salve LAA intégrée dans une séquence au sein du préambule LAA de la salve LAA.

**3.** L'appareil de la revendication 2, dans lequel la séquence facilite la synchronisation d'un ou plusieurs équipements utilisateurs, UE, avec la station de base.

**4.** L'appareil de la revendication 1, dans lequel la circuiterie d'émetteur est configurée pour émettre l'information de contrôle de salve LAA via un canal de contrôle de salve LAA au sein du préambule LAA de la salve LAA.

**5.** L'appareil de l'une des revendications 1 à 4, dans lequel l'appareil comprend en outre une circuiterie de récepteur (330) configurée pour recevoir des messages CTS en provenance d'au moins un UE.

**6.** L'appareil de la revendication 5, dans lequel les un ou plusieurs UE comprennent *N* UE, N étant l'un d'entre : un nombre prédéterminé, un nombre configuré via une signalisation de couche supérieure, ou un nombre indiqué via l'information de contrôle de salve LAA.

**7.** L'appareil de l'une des revendications 1 à 6, dans lequel l'information de contrôle de salve LAA comprend un ou plusieurs d'entre : une information d'identité de cellule, une information d'identité d'opérateur, une information de configuration de symbole de référence de découverte, DRS, une information de configuration de duplex par répartition temporelle, TDD, une information de puissance d'émission de liaison descendante, DL, et de liaison montante, UL, ou une indication de ce qu'un canal physique de broadcast, PDCH, est transmis au sein de la salve LAA.

**8.** Un appareil configuré pour être employé au sein d'un équipement utilisateur, UE, l'appareil comprenant :

une circuiterie de récepteur (410) configurée pour recevoir un préambule d'accès assisté licencié, LAA, et au moins un message de canal physique de contrôle de liaison descendante, PDCCH, ou de PDCCH renforcé, ePDCCH, d'une émission de salve LAA via une porteuse non licenciée, le préambule LAA ou l'au moins un message PDCCH ou ePDCCH comprenant une information de contrôle de salve LAA qui indique une information de configuration associée à l'émission de salve LAA, l'information de contrôle de salve LAA comprenant un message de requête d'émission, RTS, comprenant une information d'adresse de récepteur qui indique au moins un UE désigné pour répondre au message RTS par un message prêt à émettre, CTS, l'au moins un UE étant indiqué via une bitmap qui associe des UE à un bit indiquant si un message CTS est ou non requis en tant que retour ;

et

un processeur (420) couplé de manière opérante à la circuiterie de récepteur et configuré pour :

récupérer l'information de contrôle de salve LAA à partir du préambule LAA ou de l'au moins un message PDCCH ou ePDCCH ; et

déterminer une longueur de l'émission de salve LAA sur la base de l'information de contrôle de salve LAA récupérée.

**9.** L'appareil de la revendication 8, dans lequel le préambule LAA comprend l'information de contrôle de salve LAA via un canal dédié de contrôle de salve LAA, et dans lequel le processeur est configuré pour récupérer l'information de contrôle de salve LAA par décodage du canal de contrôle de salve LAA.

**10.** L'appareil de l'une des revendications 8 à 9, dans lequel la circuiterie de récepteur est configurée pour effectuer une évaluation de canal libre, CCA, ou une CCA étendue, en réponse au message RTS, et dans lequel l'appareil comprend en outre une circuiterie d'émetteur configurée pour émettre un message CTS en réponse à la CCA ou la CCA étendue indiquant qu'une porteuse non licenciée est libre.

**11.** L'appareil de la revendication 10, dans lequel la circuiterie de récepteur est en outre configurée pour recevoir un signal de contrôle de ressource radio, RRC, qui indique le bit associé à l'UE.

**12.** L'appareil de la revendication 10, dans lequel l'information de contrôle de salve LAA comprend une information de contrôle de puissance d'émission, TPC, et dans lequel la circuiterie d'émetteur (430) est configurée pour émettre au moins l'un d'entre le message CTS ou les données de liaison montante sur la base de l'information TPC.

Example UE

FIG. 1

FIG. 2

FIG. 3

300

To antenna(s)

To antenna(s)

330 RECEIVER CIRCUITRY

320 TRANSMITTER CIRCUITRY

310 PROCESSOR

340 MEMORY

**FIG. 4**

400

To antenna(s)

To antenna(s)

410 — RECEIVER CIRCUITRY

430 — TRANSMITTER CIRCUITRY

420 — PROCESSOR

440 — MEMORY

500

```
┌────────────────────────────────┐
510 ─│  PERFORM CCA OR EXTENDED       │
      │  CCA ON UNLICENSED CARRIER     │
      └────────────────────────────────┘
                     │
      ┌────────────────────────────────┐
520 ─│     CONSTRUCT LAA BURST         │
      └────────────────────────────────┘
                     │
      ┌────────────────────────────────┐
530 ─│  GENERATE LAA BURST CONTROL     │
      │        INFORMATION             │
      └────────────────────────────────┘
                     │
      ┌────────────────────────────────┐
      │  TRANSMIT LAA BURST CONTROL    │
540 ─│  INFORMATION VIA UNLICENSED     │
      │         CARRIER                │
      └────────────────────────────────┘
                     │
      ┌────────────────────────────────┐
      │  OPTIONALLY RECEIVE CTS        │
550 ─│  MESSAGE(S) IN RESPONSE TO      │
      │  RTS MESSAGE IN LAA BURST      │
      │  CONTROL INFORMATION           │
      └────────────────────────────────┘
```

FIG. 5

600

```
┌─────────────────────────────┐
│    RECEIVE LAA BURST         │
610─┤  CONTROL INFORMATION VIA   │
│  LAA PREAMBLE OR (e)PDCCH   │
└─────────────────────────────┘
              │
┌─────────────────────────────┐
│     RECOVER LAA BURST        │
620─┤   CONTROL INFO FROM LAA    │
│   PREAMBLE OR (e)PDCCH      │
└─────────────────────────────┘
              │
┌─────────────────────────────┐
│  DETERMINE CONFIG INFO OF    │
630─┤ LAA BURST FROM LAA BURST   │
│    CONTROL INFORMATION      │
└─────────────────────────────┘
              │
┌─────────────────────────────┐
│  OPTIONALLY TRANSMIT CTS     │
640─┤ MESSAGE IN RESPONSE TO     │
│  RTS MESSAGE WITHIN LAA     │
│   BURST CONTROL INFO        │
└─────────────────────────────┘
```

FIG. 6

FIG. 7

EP 3 251 458 B1

800

| 810 | 820 | 830 |
|---|---|---|
| Header | Payload for LAA burst control information | CRC |

**FIG. 8**

**EP 3 251 458 B1**

**Patent documents cited in the description**

- US 62108661

- US 20140341018 A1